(19) Europäisches Patentamt
European Patent Office
Office européen des brevets

(11) EP 3 331 944 B1

(12) EUROPEAN PATENT SPECIFICATION

(45) Date of publication and mention of the grant of the patent:
**10.04.2024 Bulletin 2024/15**

(21) Application number: **16767032.2**

(22) Date of filing: **04.08.2016**

(51) International Patent Classification (IPC):
***C08K 5/13*** *(2006.01)* ***C08K 5/134*** *(2006.01)*
***C08K 5/20*** *(2006.01)* ***C08K 5/524*** *(2006.01)*
***C08K 5/526*** *(2006.01)* ***C08K 5/527*** *(2006.01)*
***C08K 5/5333*** *(2006.01)* ***C08K 5/5393*** *(2006.01)*

(52) Cooperative Patent Classification (CPC):
(C-Sets available)
**C08K 5/527; C08K 5/13; C08K 5/1345; C08K 5/20; C08K 5/524; C08K 5/526; C08K 5/5333; C08K 5/5393** (Cont.)

(86) International application number:
**PCT/NL2016/050569**

(87) International publication number:
**WO 2017/023174 (09.02.2017 Gazette 2017/06)**

(54) **POLYESTER COMPOSITION**

POLYESTERZUSAMMENSETZUNG

COMPOSITION DE POLYESTER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2015 NL 2015265**
**04.08.2015 US 201562200704 P**

(43) Date of publication of application:
**13.06.2018 Bulletin 2018/24**

(73) Proprietor: **Furanix Technologies B.V.**
**1014 BV Amsterdam (NL)**

(72) Inventors:
- **NAKAJIMA, Hajime**
  **1014 BV Amsterdam (NL)**
- **VAN BERKEL, Jesper Gabriël**
  **1014 BV Amsterdam (NL)**
- **KOLSTAD, Jeffrey John**
  **1014 BV Amsterdam (NL)**

(74) Representative: **EP&C**
**P.O. Box 3241**
**2280 GE Rijswijk (NL)**

(56) References cited:
**EP-A1- 2 511 320**
**WO-A1-2013/149157**
**WO-A1-2013/149222**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 331 944 B1

(52) Cooperative Patent Classification (CPC): (Cont.)

C-Sets
**C08K 5/13, C08L 67/02;**
**C08K 5/1345, C08L 67/02;**
**C08K 5/20, C08L 67/02;**
**C08K 5/524, C08L 67/02;**
**C08K 5/526, C08L 67/02;**
**C08K 5/527, C08L 67/02;**
**C08K 5/5333, C08L 67/02;**
**C08K 5/5393, C08L 67/02**

## Description

The present invention relates to a polyester composition comprising poly(alkylene furandicarboxylate) and an additive.

Poly(alkylene furandicarboxylate) has been developed as a polyester with advantageous properties. As monomers use is made of an alkylene glycol and furandicarboxylic acid, in particular 2,5-furandicarboxylic acid. 2,5-Furandicarboxylic acid (2,5-FDCA) is a diacid that can be produced from natural sources such as carbohydrates. Routes for its preparation using air oxidation of 2,5-disubstituted furans such as 5-hydroxymethylfurfural or ethers thereof with catalysts comprising Co and Mn have been disclosed in e.g. WO2010/132740, WO2011/043660 and WO2011/043661.

US 2551731 describes the preparation of polyesters and polyester-amides by reacting glycols with dicarboxylic acids of which at least one contains a heterocyclic ring, such as 2,5-FDCA. Under melt polymerization conditions, using sodium- and magnesium methoxide as a catalyst, 2,5-FDCA or 2,5-FDCA dimethyl ester and 1.6 equivalents of ethylene glycol were reacted in an esterification step or transesterification step, respectively, at ambient pressure between 160 and 220 °C, after which a polycondensation was carried out between 190 and 220 °C under a few mm Hg pressure. The product had a reported melting point of 205-210 °C and readily yielded filaments from the melt.

In WO 2013/120989 a continuous process for the preparation of poly(ethylene furandicarboxylate) is described wherein 2,5-FDCA or a diester thereof is mixed with ethylene glycol at elevated temperature to give a paste or a homogeneous solution, the paste or solution is converted to an esterification product of 2,5-FDCA and ethylene glycol, the esterification product is polycondensed under reduced pressure, wherein the polycondensation is performed in two stages. In an example the polycondensation product was reported to have an intrinsic viscosity of 1.05 dL/g.

In WO 2010/077133 a process for preparing furandicarboxylate-containing polyesters is described wherein the diester of 2,5-FDCA is transesterified with a diol, and the ester composition thus obtained is subjected to polycondensation. The polycondensate may then be subjected to solid state polymerization. In the above-mentioned WO 2010/077133 it is observed that the production of poly(alkylene furandicarboxylate polyester often results in colored products. The invention of WO 2010/077133 is based on the finding that colorless material can be produced. Such colorless material can be used for the production of e.g. bottles as disclosed in WO 2013/062408. This application WO 2013/062408 discloses a process, wherein the dimethyl ester of 2,5-FDCA is transesterified with ethylene glycol, or bis(2-hydroxyethyl)-2,5-furandicarboxylate is used as starting material. The transesterification product or this starting material is then subjected to polycondensation and after a drying/crystallization step the polycondensate is subjected to solid state polymerization to enhance the molecular weight of the polycondensate. The product may be used as water bottles, fibers or films.

Also KR 20140003167 describes a polyester polymer with excellent transparency which is manufactured by using a biomass originated furandicarboxylate ester compound with ethylene glycol. The polyesters thus produced yield b* values in the range of 6 to 10. In comparative examples also furandicarboxylic acid has been used. These polyesters have more color and have b* values in the range 25 to 34.

In US 2012/0207956 polyesters are described, having a 2,5-furandicarboxylate moiety within the polymer backbone and having a degree of polymerization of 185 or more and 600 or less. These polymers are made in a three step process involving the esterification of the 2,5-FDCA or the transesterification of the diester thereof with a diol, and a second step involving polycondensation, followed by solid state polymerization as third step. The color of the polyesters is not mentioned. The polyester obtained may be blended with additives, such as flame retardants, colorants, antioxidants, UV stabilizers and various fillers. Since the polyesters are stated to be used in toner containers, ink tanks and structural material for copiers and printers, it is evident that the color of the polyester is not considered an important feature.

WO 2013/149222 and WO 2013/149157 disclose polycondensation catalysts wherein tin(II) catalyst is prepared from tin(IV) salt by reduction with e.g. trialkyl phosphite, monoalkyl diaryl phosphite, dialkyl monoaryl phosphite or triaryl phosphite.. EP 2511320 mentions many potential additives amongst which a color protection agent.

Colorless poly(alkylene furandicarboxylate) is prone to become colored on heat treatment. Such treatment may e.g. involve the extrusion of the polyester to form pellets or to form preforms for the manufacture of blow molded articles. It is an objective of the present invention to retain the lack of coloring during operations of the polyester. Accordingly, the present invention provides a polyester composition comprising poly(alkylene furandicarboxylate) and a color-stabilizing agent wherein the color-stabilizing agent is selected from the group consisting of sterically hindered phenolic compounds, phosphonite compounds, phosphites containing at least one tri-substituted phenyl moiety and combinations thereof.

The poly(alkylene furandicarboxylate) typically comprises 2,5-FDCA as diacid building block and an alkylene glycol, or a mixture of alkylene glycols, as diol building blocks. The alkylene glycol may be selected from the group consisting of $C_2$-$C_{10}$ alkylene glycol, suitably from the group consisting of $C_2$-$C_6$ alkylene glycols, more preferably from the group consisting of $C_2$-$C_4$ alkylene glycol. Most preferably, the alkylene glycol is ethylene glycol. The amount of alkylene glycol is suitably in the range of 100 to 95 mol%, based on the molar amount of diacid building blocks. If the amount of alkylene glycol is less than 100 mol%, the remaining diol building blocks may comprise dialkylene glycol,

such as diethylene glycol, trialkylene glycol, isosorbide, erythritol or mixtures thereof. Preferably, the poly(alkylene furan dicarboxylate) comprises substantially 100% alkylene glycol as diol building blocks. Suitably, the diacid building blocks of the polyester consists for at least 95 mol% of 2,5-FDCA, i.e. 2,5-furandicarboxylic acid. The remaining 5 mol% may comprise other diacids, such as terephthalic acid, isophthalic acid, azelaic acid, adipic acid, sebacic acid, succinic acid, 1,4-dicyclohexane dicarboxylic acid, maleic acid and mixtures thereof. Preferably, the poly(alkylene furan dicarboxylate) comprises a poly(alkylene 2,5-furandicarboxylate). The poly(alkylene 2,5-furandicarboxylate) suitably comprises only 100% 2,5-FDCA as diacid building blocks. Since the diol preferably comprises ethylene glycol, the poly(alkylene furandicarboxylate) is preferably poly(ethylene 2,5-furandicarboxylate).

The color-stabilizing agent is selected from the group consisting of sterically hindered phenolic compounds, phosphonite compounds, phosphites and combinations thereof. Common antioxidants are sterically hindered phenolic compounds. It has been found that although these compounds are very commonly used in various polyesters, the use of these compounds is not preferred in poly(alkylene furandicarboxylate) resins.

If applied, the sterically hindered phenolic compound suitably contains at least one tertiary alkyl group at the 2 position. Suitable phenolic compounds are represented by formula (I)

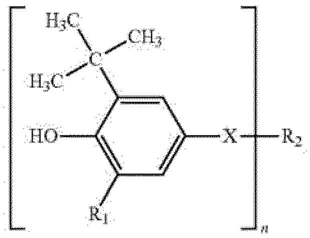

(I)

wherein $R_1$ is a linear or branched $C_1$-$C_{10}$ alkyl group;
n is an integer of 1 to 4;
X represents $-CH_2-$, $-CH_2-C(O)-Y-$, $-CH_2-CH_2-C(O)-Y-$, $-CH_2-C(O)-O-CH_2-$, or $-CH_2-C(O)-O-CH_2-CH_2-$;
Y is -O- or -NH-; and
when n is 1, $R_2$ is $C_1$-$C_{20}$ alkyl;
when n is 2, $R_2$ is $C_2$-$C_{12}$ alkylene, $C_2$-$C_{20}$ alkylene, wherein one or more methylene groups are replaced by oxygen or sulfur atoms; and
when n is 3, $R_2$ is 1,3,5 triazinetrione.

$R_1$ is suitably methyl or t-butyl.

Suitable examples of $R_2$ include $C_1$-$C_{25}$ alkyl, preferably $C_1$-$C_{18}$ alkyl, for example $C_4$-$C_{18}$ alkyl. An especially preferred definition of $R_2$ is $C_1$-$C_{25}$ alkyl, more preferred $C_8$-$C_{18}$ alkyl, especially $C_{14}$-$C_{18}$ alkyl, for example $C_{18}$ alkyl. The alkyl group may be linear or branched, such as n-octyl, 2-ethylhexyl, 1,1,3-trimethylhexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl, hexadecyl, heptadecyl, octadecyl, eicosyl or docosyl.

When n is 2, suitable examples of $R_2$ include ethylene, propylene, tetramethylene, pentamethylene, hexamethylene, heptamethylene, octamethylene, decamethylene and dodecamethylene. $R_2$ may comprise oxygen or sulfur atoms, such as in $-CH_2-O-CH_2-CH_2-O-CH_2-$, $-CH_2-(O-CH_2-CH_2-)_2-O-CH_2-$, $-CH_2-(O-CH_2-CH_2-)_3-O-CH_2-$, $-CH_2-(O-CH_2-CH_2-)_4-O-CH_2-$, $-CH_2-CH_2-O-CH_2-CH_2-O-CH_2-CH_2-$ or $-CH_2-CH_2-S-CH_2-CH_2-$.

As indicated, the use of sterically hindered phenolic compounds alone is not preferred.

The color-stabilizing agent is preferably selected from the group consisting of phosphonite compounds, phosphites and combinations thereof.

When the color-stabilizing agent is a phosphonite compound, the phosphonite compound may be aliphatic or aromatic. Suitably the phosphonite compounds are aromatic. Examples of suitable phosphonite compounds are represented by formula (II)

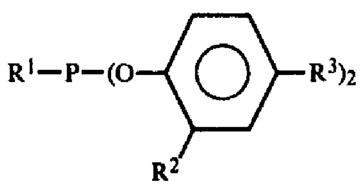

**(II)**

**wherein** $R^1$ is alkyl with 1 to 18 carbon atoms, phenyl or phenyl substituted by 1 to 3 alkyl groups with 1 to 8 carbon atoms in each alkyl group, diphenyl or diphenyl substituted at the 4'-position by the phosphonite moiety

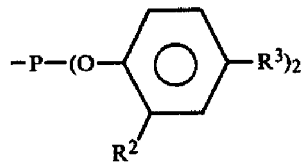

$R^2$ is tertiary alkyl with 4 to 18 carbon atoms, benzyl, α-methylbenzyl or α,α-dimethylbenzyl, and $R^3$ is hydrogen, branched or linear alkyl of 1 to 18 carbon atoms, benzyl, α-methylbenzyl or α,α-dimethylbenzyl. Preferably, $R^3$ and $R^3$ are both tertiary alkyl groups with 4 to 8 carbon atoms, in particular t-butyl. $R^1$ is preferably a diphenyl group substituted with a phosphonite moiety at the 4'-position. Most preferably, the phosphonite compound comprises a diphenyl group with as substituents at the 4- and 4'-positions two identical phosphonite moieties wherein $R^2$ and $R^3$ are tertiary alkyl with 4 to 8 carbon atoms, most preferably t-butyl.

Preferably, the color-stabilizing agent is a phosphite. Although trialkylphosphites can be used, such as tris($C_1$-$C_{12}$ alkyl)phosphite, e.g. trimethyl phosphite, tributylphosphites, trioctyl phosphite or trinonyl phosphite, it is preferred to use aromatic phosphites. The phosphites therefore preferably contain two or more, optionally substituted, phenyl groups. The substituents in the phenyl groups are suitably selected from linear or branched $C_1$-$C_{18}$ alkyl groups. More preferably, the substituents are tertiary alkyl groups with 4 to 8 carbon atoms, in particular t-butyl. Suitably, the phosphite **contains at least one tri-substituted phenyl** moiety. The phosphite suitably is a compound of formula R'- Q - R", wherein Q represents a pentaerythritol-phosphite group of formula (III).

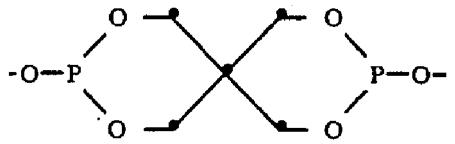

(III)

and wherein R' and R" aliphatic, cycloaliphatic or aromatic organic groups. R' and R" are suitably a linear or branched alkyl group with 1 to 30 carbon atoms, preferably from 5 to 25, more preferably from 8 to 20 carbon atoms. Alternatively, the groups R' and R" are cycloaliphatic groups, such as an optionally substituted cyclohexyl group, which may suitably be substituted with one or more linear or branched alkyl groups having 1 to 20 carbon atoms. Preferably, the groups R' and R" are aromatic groups, more suitably phenyl groups, which may contain 1 to 5 substituents. Preferably, the phenyl groups comprise 2 to 5 substituents, more preferably 3 or 4 substituents. The substituents are suitably selected from linear or branched alkyl groups having 1 to 20 carbon atoms, more preferably tertiary alkyl groups with 4 to 10 carbon atoms, most preferably t-butyl. When the phenyl group contains 3 substituents the substituents are suitably positioned on the 2, 4 and 6 position of the phenyl ring. Most preferably, the color-stabilizing agent is a phosphite of the formula R'- Q - R", wherein Q represents a pentaerythritol-phosphite group of formula (III).

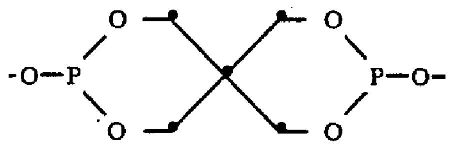

(III)

and wherein R' and R" are 2,6-di(t-butyl)- 4-methyl-phenyl groups.

As the color-stabilizing agent that is used in the present invention is very effective, the amount thereof in the polyester composition according to the invention can be low. Typically amounts of color-stabilizing agents as low as 0.01 %wt based on the composition may already be effective. For polyester compositions that are to be subjected to heat treatment, an amount of color-stabilizing agent may be up to 5%wt, Thus the amount of color-stabilizing agent in the composition may suitably be in the range of 0.01 to 5%wt, more preferably in the range of 0.03 to 4%wt, most preferably in the range of 0.05 to 2.5 %wt, all weight percentages based on the weight of the poly(alkylene furandicarboxylate) and color-stabilizing agent. On the other hand it has been found advantageous to prepare masterbatches of the polyester composition of the present invention that can be used to be added to poly(alkylene fu rand icarboxylate)

to arrive at the desired concentration. The amount of the color-stabilizing agent in the masterbatch can be as high as 50%wt, whereas suitably the amount is up to 25%wt, based on the weight of the poly(alkylene furandicarboxylate) and color-stabilizing agent. A minimum amount of a masterbatch may be as low as 5%wt. The amount of color-stabilizing agent in polyester compositions can therefore range from 0.01 to 50%wt, preferably from 0.03 to 25%wt, based on the weight of the poly(alkylene furandicarboxylate) and color-stabilizing agent.

As indicated above, the poly(alkylene furandicarboxyiate) can contain $C_2$-$C_{10}$ alkylene groups, suitably $C_2$-$C_6$ alkylene groups, more preferably $C_2$-$C_4$ alkylene groups. Most preferably, the poly(alkylene furandicarboxylate) is polyethylene 2,5-furandicarboxylate). It has been found that the end groups of the polyester chains have an influence on the effectiveness of the color-stabilizing agent. The end groups can be selected from the group consisting of a carboxylic end group, a hydroxyl end group, a methyl ester end group and a furoic acid end group. The latter may be obtained owing to decarboxylation in the polymerization process. When the poly(alkyiene furandicarboxylate) is polyethylene 2,5-furandicarboxylate) it has been found advantageous that the poly(ethylene 2,5-furandicarboxylate) has a carboxylic end group content in the range of 0 to 122 meq/kg, preferably from 2 to 100 meq/kg. The carboxylic acid end groups are determined by using the titration method according to ASTM D7409, adapted for poly(ethylene 2,5-furandicarboxylate). A thus modified method thereof involves the titration of a 4% w/v solution of poly(ethylene 2,5-furandicarboxylate) in ortho-cresol with 0.01 M KOH in ethanol as titrant to its equivalence point, using 0.5 mg of bromocresol green (2,6-dibromo-4-[7-(3,5-dibromo-4-hydroxy-2-methyl-phenyl)-9,9-dioxo-8-oxa-9λ6-thiabicyclo[4.3.0]nona-1,3,5-trien-7-yl]-3-methyl-phenol) in 0.1 ml ethanol as indicator.

In addition the polyethylene 2,5-furandicarboxylate has a hydroxyl end group content in the range of 30 to 200 meq/kg and/or a furoic acid end group content in the range of 0 to 15 meq/kg.

In general there are a number of methods to determine the end groups in polyesters. Such methods include titration, infrared and nuclear magnetic resonance (NMR) methods. Often the separate methods are used to quantify the four main end groups: carboxylic acid end groups, hydroxyl end groups, alkyl ester groups, such as the methyl ester end groups (for polyesters from the dialkyl ester of a dicarboxylic acid) and the end groups that are obtained after decarboxylation. A.T Jackson and D.F. Robertson have published an 1H-NMR method for end group determination in "Molecular Characterization and Analysis of Polymers" (J.M. Chalmers en R.J. Meier (eds.), Vol. 53 of "Comprehensive Analytical Chemistry", by B. Barcelo (ed.), (2008) Elsevier, on pages 171-203. In this method the hydroxyl end group is determined in polyethylene terephthalate (PET) by using a selection of harsh solvents such as 3-chlorophenol, 1,1,1,3,3,3-hexafluoro-2-propanol, trichloroacetic acid or trifluoroacetic acid. It is preferred to use deuterated 1,1,2,2-tetrachloroethane (TCE-d2) as solvent without any derivatization of the polyester. A similar method can be carried out for polyesters that comprise furandicarboxylate moieties and ethylene glycol residues. The measurement of the end groups for the latter polyesters can be performed at room temperature without an undue risk of precipitation of the polyester from the solution. This $^1$H-NMR method using TCE-d2 is very suitable to determine the hydroxyl end groups (HEG) and the furoic acid end groups, also known as decarboxylation end groups (DecarbEG). Peak assignments are set using the TCE peak at a chemical shift of 6.04 ppm. The furan peak at a chemical shift of 7.28 ppm is integrated and the integral is set at 2.000 for the two protons on the furan ring. The HEG is determined from the two methylene protons of the hydroxyl end group at 4.0 ppm. The content of DEG is determined from the integral of the shifts at 3.82 to 3.92 ppm, representing four protons. The decarboxylated end groups are found at a shift of 7.64-7.67 ppm, representing one proton. When the polyester also comprises methyl ester end groups, the methyl signal will occur at about 3.97 ppm, representing 3 protons.

The polyethylene 2,5-furandicarboxylate) may have a relatively high molecular weight. The molecular weight is expressed in terms of intrinsic viscosity. First the relative viscosity ($\eta_{rel}$) is determined in a 60/40 w/w mixture of phenol and tetrachloroethane at 30 °C and a concentration (c) of 0.4 g/dL. This procedure is similar to the ASTM D4603 standard for the determination of the inherent viscosity for poly(ethylene terephthalate). The intrinsic viscosity is then calculated using the Billmyer equation:

$$\text{Intrinsic viscosity (IV)} = \{\eta_{rel} - 1 + 3 * \ln(\eta_{rel})\}/(4 * c)$$

The poly(ethylene 2,5-furandicarboxylate) has typically been subjected to solid state polymerization, also known as solid stating. Due to solid stating the molecular weight is increased such as to 0.65 to 1.2 dL/g, preferably to an intrinsic viscosity of at least 0.75 dL/g, more preferably in the range of 0.75 dL/g to 1.2 dL/g.

The poly(ethylene 2,5-furandicarboxylate) is typically a semi-crystalline polyester. Polymer crystallinity can be determined with Differential Scanning Calorimetry (DSC) by quantifying the heat associated with melting of the polymer. The heat can be reported as the percentage of crystallinity by normalizing the melting heat to that of a 100% crystalline sample. However, those samples are rare. Therefore, the crystallinity is often expressed as net enthalpy in terms of number of Joules per gram which number is derived from the DSC technique. The enthalpy of melting and crystallization can be determined in accordance with ISO 11357-3. The poly(ethylene 2,5-furandicarboxylate) in the composition according to the invention suitably has a crystallinity of at least 25 J/g, preferably of at least 40 J/g, measured by DSC.

The crystallinity will then advantageously be in the range of 40 to 90 J/g.

The melting point of a polymer is easily determined by DSC and measured at the top of the endothermic peak. The ISO11357-3 standard describes such a melting point determination. In accordance with this determination, the poly(ethylene 2,5-furandicarboxylate) suitably has a melting point of at least 200 °C. In highly crystalline polyester the melting point may exceed 230°C and may be as high as 245 °C. It suitably has a melting point of at least 200 °C, preferably at least 215 °C.

Acetaldehyde may be formed during the polycondensation process in the preparation of poly(ethylene 2,5-furandicarboxylate). Its content in polyester compositions can be determined using known methods. A suitable method is described in ASTM F 2013; this is described for polyethylene terephthalate, but can also be used for the polyester composition of the present invention. Applicants have found that polyester compositions can have acetaldehyde values of 18 mg/kg or higher, prior to the additional steps of solid state polymerization. Applicants have also found that a suitable solid state polymerization process can reduce the levels of acetaldehyde. Such a suitable solid state polymerization process comprises heating a semi-crystalline starting polyester comprising ethylene 2,5-furandicarboxylate units, and having a melting point Tm, at a temperature in the range of (Tm-40°C) to Tm to obtain a solid stated polyester, wherein the semi-crystalline starting polyester has an intrinsic viscosity of at least 0.45 dL/g, and an amount of carboxylic acid end groups in the range of 15 to 122 meq/kg. It has been found that the solid stated poly(ethylene 2,5-furandicarboxylate) thus obtained has a reduced acetaldehyde level, e.g. to less than 1 mg/kg (ppm) and preferably to less than 0.5 mg/kg, calculated as acetaldehyde per kg poly(ethylene 2,5-furandicarboxylate).

As is taught in US 6569479 acetaldehyde is naturally formed during processing of any polyester containing ethylene glycol linkages. The compound is formed via a two-step reaction: the first step is cleavage of a polymer chain, generating a vinyl end group and a carboxylic acid end group. The second step is reaction of the vinyl end group with a hydroxyethyl end group, reforming the polymer chain and releasing acetaldehyde. When the polymer is used in a container for beverages, the acetaldehyde may migrate from the container sidewall into the beverage over time. During the lifetime of a typical container, several hundred ppb of acetaldehyde can migrate from the container sidewall into the beverage. For sensitive products, such as water, these levels of acetaldehyde are significantly above the taste threshold. In US 4340721 it is shown that when polyethylene terephthalate contains more than 1 ppm acetaldehyde, the polymer is unsuitable for use as material for beverage containers. Therefore there is a great desire to limit the amount of acetaldehyde in polyesters comprising ethylene furandicarboxylate units also to a level below 1 ppm (mg acetaldehyde per kg polyester). The composition according to the invention preferably contains poly(ethylene 2,5-furandicarboxylate) having an acetaldehyde content of at most 1 mg/kg, preferably at most 0.5 mg/kg.

The invention is further illustrated by means of the following examples.

EXAMPLE 1

In a series of experiments 1000 ppmw of a color-stabilizing agent was mixed with a poly(ethylene 2,5-furandicarboxylate). The mixture was passed through an extruder at a temperature of 255 °C at a screw rotation of 50 rpm and for a period of 40 sec. The resulting polyester was checked for color. The color is expressed in terms of absorbance (A, %). The light absorbance was measured as a 30 mg/mL solution in a dichloromethane : hexafluoroisopropanol 8:2 (vol/vol) mixture at 400 nm. Alternatively, the b* value was determined using the CIE L*a*b* method. For comparison purposes a separate sample of the poly(ethylene 2,5-furandicarboxylate) was extruded under the same conditions without any color-stabilizing agent. The results are shown in Table 1 below.

Table 1

| Exp. No. | Color-stabilizing agent | A, % | b* |
|---|---|---|---|
| 1 | - | 2.4 | 5.8 |
| 2 | 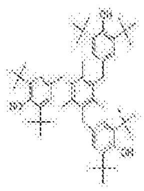 | 3.0 | - |

(continued)

| Exp. No. | Color-stabilizing agent | A, % | b* |
|---|---|---|---|
| 3 | 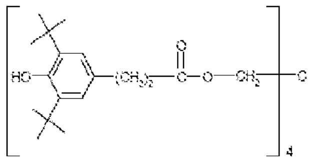 | 2.4 | 6.0 |
| 4 | 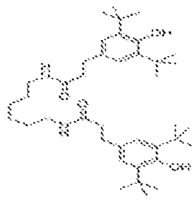 | 3.6 | - |
| 5 | 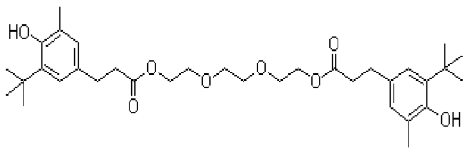 | 3.0 | - |
| 6 | 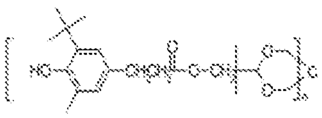 | 2.5 | - |
| 7 | 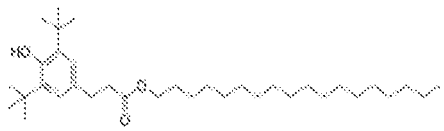 | 2.6 | 6.4 |
| 8 | 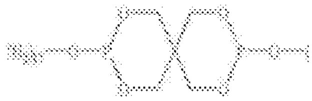 | 2.4 | 7.0 |
| 9 | 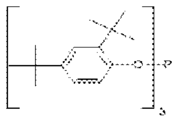 | 2.4 | 5.8 |
| 10 | 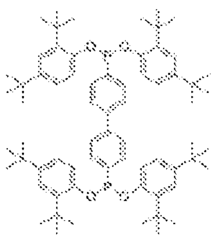 | 2.2 | 5.3 |
| 11 | 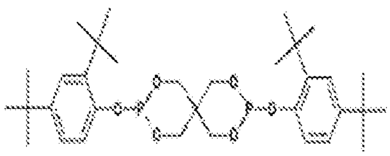 | 2.6 | 6.3 |

(continued)

| Exp. No. | Color-stabilizing agent | A, % | b* |
|---|---|---|---|
| 12 | 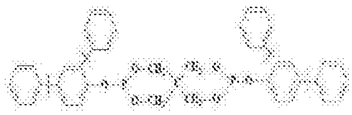 | 2.5 | 6.1 |
| 13 | 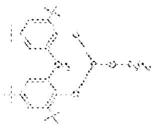 | 2.7 | - |
| 14 | 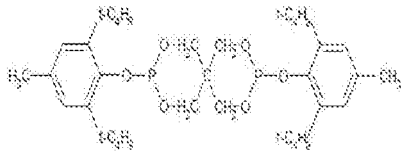 | 2.1 | 5.4 |
| 15 | 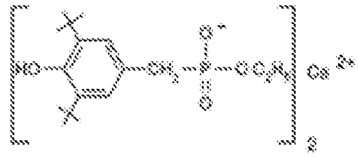 | 2.5 | 6.2 |

The above results show that the phosphonite compound of Exp. No. 10 and the phosphite of Exp. No. 14 gave the best results. The Exp. Nos. 2 to 7 using sterically hindered phenolic compounds, all resulted in more colored products than blank Exp. No. 1.

EXAMPLE 2

To study the effect of prolonged exposure to heat, the mixtures of Exp. Nos. 9, 10 and 14 were passed through the extruder three times, so that an exposure to 255 °C for a period of 120 sec was obtained. The color of the resulting mixtures was again determined as in Example 1, and compared with the results of a blank experiment. The results are shown in Table 2.

Table 2

| Exp. No | Color stabilizing agent | A, % | b* |
|---|---|---|---|
| 16 | - | 3.9 | 9.5 |
| 17 | 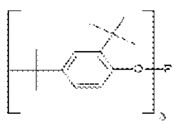 | 3.7 | 9.0 |
| 18 | 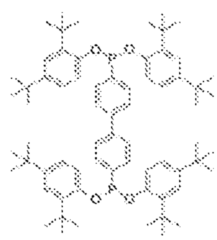 | 4.0 | 9.5 |

(continued)

| Exp. No | Color stabilizing agent | A, % | b* |
|---|---|---|---|
| 19 | 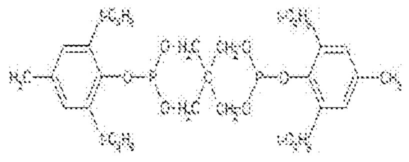 | 3.2 | 7.9 |

The results show that the phosphites of Exp. No. 17 and 19 give better results at prolonged exposure to heat than the phosphonite of Exp. No. 18.

EXAMPLE 3

To show the effect of combinations of phosphites with sterically hindered phenolic compounds, the phosphites of Exp. Nos. 9 and 14 were combined with the sterically hindered phenolic compound of Exp. No. 3. The relative proportions of the agents were varied, whereas the total amount of the combination of agents was 1000 ppmw.

The combinations were mixed with the poly(ethylene 2,5-furandicarboxylate) and subsequently treated in the same way as the mixtures in Example 1. The results are shown in Table 3.

Table 3

| Exp. No. | Phosphite | prop | Phenolic compound | prop | A,% | b* |
|---|---|---|---|---|---|---|
| 20 | 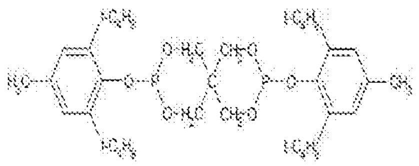 | 0.75 | 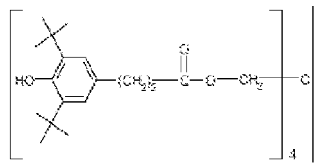 | 0.25 | 2.3 | 5.6 |
| 21 | - same - | 0.5 | - same - | 0.5 | 2.6 | 6.4 |
| 22 | - same - | 0.25 | - same - | 0.75 | 2.6 | 6.4 |
| 23 | 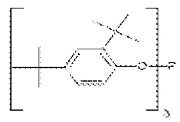 | 0.5 | - same - | 0.5 | 2.4 | 5.9 |

A comparison between the results of Experiment No. 14 with those of Experiment Nos. 20-22 shows that when a proportion of the phosphite of Experiment No. 14 is replaced by a sterically hindered phenolic compound, the color-stabilizing effect of the combination is virtually as good as the effect of the phosphite alone. The same is the case when apportion of the phosphate of Experiment No. 9 is replaced by a sterically hindered phenolic compound (cf. Experiment Nos. 9 and 23).

## Claims

1. Polyester composition comprising poly(alkylene furandicarboxylate) and a color-stabilizing agent wherein the color-stabilizing agent is selected from the group consisting of sterically hindered phenolic compounds, phosphonite compounds, phosphites containing at least one tri-substituted phenyl moiety and combinations thereof.

2. Composition according to claim 1, wherein the color-stabilizing agent comprises a phosphonite compound, a phosphite containing at least one tri-substituted phenyl moiety or a combination thereof.

3. Composition according to claim 2, wherein the color-stabilizing agent comprises a phosphite containing at least one tri-substituted phenyl moiety.

4. Composition according to any one of claims 1 to 3, wherein the color-stabilizing agent is a phosphite of the formula R'- Q -R", wherein Q represents a pentaerythritol-phosphite group of formula (III)

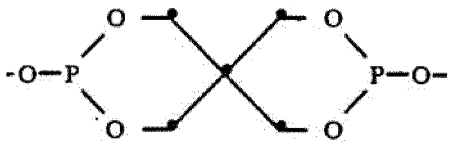

(III)

and wherein R' and R" are 2,6-di(t-butyl)-4-methyl-phenyl groups.

5. Composition according to any one of claims 1 to 4, wherein the color-stabilizing agent is present in an amount ranging from 0.01 to 50%wt, preferably from 0.03 to 25%wt, based on the weight of the poly(alkylene furandicarboxylate) and color-stabilizing agent.

6. Composition according to any one of claims 1 to 5, wherein the poly(alkylene furandicarboxylate) is poly(ethylene 2,5-furandicarboxylate).

7. Composition according to claim 6, wherein the poly(ethylene 2,5-furandicarboxylate) has a carboxylic end group content in the range of 0 to 122 meq/kg.

8. Composition according to claim 6 or 7, wherein the poly(alkylene furandicarboxylate) is poly(ethylene 2,5-furandicarboxylate) having a hydroxyl end group content in the range of 30 to 200 meq/kg and/or a furoic acid end group content in the range of 0 to 15 meq/kg.

9. Composition according to any one of claims 6 to 8, wherein the poly(ethylene 2,5-furandicarboxylate) has a molecular weight expressed as intrinsic viscosity (IV) of at least 0.75 dL/g, preferably an IV in the range of 0.75 to 1.2 dL/g wherein first the relative viscosity ($\eta_{rel}$) is determined in a 60/40 w/w mixture of phenol and tetrachloroethane at 30 °C and a concentration (c) of 0.4 g/dL and the intrinsic viscosity is then calculated using the Bilmer equation:

$$\text{Intrinsic viscosity (IV)} = \{\eta_{rel} -1+3*(\eta_{rel})\}/(4*c).$$

10. Composition according to any one of claims 6 to 9, wherein the poly(ethylene 2,5-furandicarboxylate) has a crystallinity of at least 40 J/g, measured by Differential Scanning Calorimetry (DSC).

11. Composition according to any one of claims 6 to 10, wherein the poly(ethylene 2,5-furandicarboxylate) has a melting point of at least 215 °C.

12. Composition according to any one of claims 6 to 11, wherein the poly(ethylene 2,5-furandicarboxylate) has an acetaldehyde content of at most 1 mg/kg, preferably at most 0.5 mg/kg.

## Patentansprüche

1. Polyesterzusammensetzung, umfassend Poly(alkylenfurandicarboxylat) und ein Farbstabilisierungsmittel, wobei das Farbstabilisierungsmittel ausgewählt ist aus der Gruppe bestehend aus sterisch gehinderten phenolischen Verbindungen, Phosphonit-Verbindungen, Phosphiten, die mindestens eine tri-substituierte Phenyl-Einheit enthalten, und Kombinationen davon.

2. Zusammensetzung nach Anspruch 1, wobei das Farbstabilisierungsmittel eine Phosphonit-Verbindung, ein Phosphit, das mindestens eine tri-substituierte Phenyl-Einheit enthält, oder eine Kombination davon umfasst.

3. Zusammensetzung nach Anspruch 2, wobei das Farbstabilisierungsmittel ein Phosphit umfasst, das mindestens eine tri-substituierte Phenyl-Einheit umfasst.

4. Zusammensetzung nach einem der Ansprüche 1 bis 3, wobei das Farbstabilisierungsmittel ein Phosphit der Formel

R'-Q-R" ist, wobei Q für eine PentaerythritPhosphit-Gruppe der Formel (III) steht:

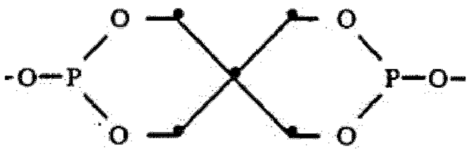

(III)

und wobei R' und R" 2,6-Di(t-butyl)-4-methylphenyl-Gruppen sind.

**5.** Zusammensetzung nach einem der Ansprüche 1 bis 4, wobei das Farbstabilisierungsmittel in einer Menge im Bereich von 0,01 bis 50 Gew.-%, vorzugsweise von 0,03 bis 25 Gew.-%, bezogen auf das Gewicht des Poly(alkylenfurandicarboxylats) und des Farbstabilisierungsmittels, vorliegt.

**6.** Zusammensetzung nach einem der Ansprüche 1 bis 5, wobei das Poly(alkylenfurandicarboxylat) Poly(ethylen-2,5-furandicarboxylat) ist.

**7.** Zusammensetzung nach Anspruch 6, wobei das Poly(ethylen-2,5-furandicarboxylat) einen Carboxyl-Endgruppen-Gehalt im Bereich von 0 bis 122 mÄq/kg aufweist.

**8.** Zusammensetzung nach Anspruch 6 oder 7, wobei das Poly(alkylenfurandicarboxylat) Poly(ethylen-2,5-furandicarboxylat) mit einem Hydroxyl-Endgruppen-Gehalt im Bereich von 30 bis 200 mÄq/kg und/oder einem Furoesäure-Endgruppen-Gehalt im Bereich von 0 bis 15 mÄq/kg ist.

**9.** Zusammensetzung nach einem der Ansprüche 6 bis 8, wobei das Poly(ethylen-2,5-furandicarboxylat) ein Molekulargewicht, ausgedrückt als intrinsische Viskosität (IV), von mindestens 0,75 dl/g, vorzugsweise eine IV im Bereich von 0,75 bis 1,2 dl/g, aufweist,
wobei zuerst die relative Viskosität ($\eta_{rel}$) in einem 60/40-Gew.-/Gew.-Gemisch von Phenol und Tetrachlorethan bei 30 °C und einer Konzentration (c) von 0,4 g/dl bestimmt wird, und die intrinsische Viskosität dann unter Verwendung der Billmayer-Gleichung berechnet wird: Intrinsische Viskosität (IV) = $\{\eta_{rel} -1+3^*(\eta_{rel})\}/(4^*C)$

**10.** Zusammensetzung nach einem der Ansprüche 6 bis 9, wobei das Poly(ethylen-2,5-furandicarboxylat) eine Kristallinität von mindestens 40 J/g, gemessen mittels dynamischer Differenzkalorimetrie (DSC), aufweist.

**11.** Zusammensetzung nach einem der Ansprüche 6 bis 10, wobei das Poly(ethylen-2,5-furandicarboxylat) einen Schmelzpunkt von mindestens 215 °C aufweist.

**12.** Zusammensetzung nach einem der Ansprüche 6 bis 11, wobei das Polyethylen-2,5-furandicarboxylat) einen Acetaldehyd-Gehalt von höchstens 1 mg/kg, vorzugsweise höchstens 0,5 mg/kg, aufweist.

## Revendications

**1.** Composition de polyester comprenant du poly(furanedicarboxylate d'alkylène) et un agent stabilisant la couleur, dans laquelle l'agent stabilisant la couleur est choisi dans le groupe constitué de composés phénoliques stériquement encombrés, de composés phosphonites, de phosphites contenant au moins un fragment phényle trisubstitué et des combinaisons de ceux-ci.

**2.** Composition selon la revendication 1, dans laquelle l'agent stabilisant la couleur comprend un composé phosphonite, un phosphite contenant au moins un fragment phényle trisubstitué ou une combinaison de ceux-ci.

**3.** Composition selon la revendication 2, dans laquelle l'agent stabilisant la couleur comprend un phosphite contenant au moins un fragment phényle trisubstitué.

**4.** Composition selon l'une quelconque des revendications 1 à 3, dans laquelle l'agent stabilisant la couleur est un phosphite de formule R'-Q-R", dans lequel Q représente un groupe pentaérythritol-phosphite de formule (III)

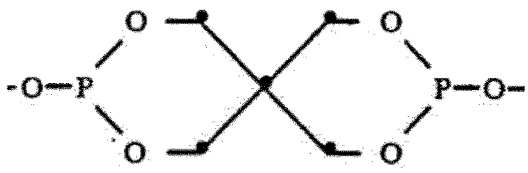

(III)

et dans lequel R' et R" sont des groupes 2,6-di(t-butyl)-4-méthyl-phényle.

5. Composition selon l'une quelconque des revendications 1 à 4, dans laquelle l'agent stabilisant la couleur est présent en une quantité dans la plage de 0,01 à 50 % en poids, de préférence de 0,03 à 25 % en poids, sur la base du poids du poly(furanedicarboxylate d'alkylène) et de l'agent stabilisant la couleur.

6. Composition selon l'une quelconque des revendications 1 à 5, dans laquelle le poly(furanedicarboxylate d'alkylène) est le poly(2,5-furanedicarboxylate d'éthylène).

7. Composition selon la revendication 6, dans laquelle le poly(2,5-furanedicarboxylate d'éthylène) a une teneur en groupe terminal carboxylique dans la plage de 0 à 122 meq/kg.

8. Composition selon la revendication 6 ou 7, dans laquelle le poly(furanedicarboxylate d'alkylène) est le poly(2,5-furanedicarboxylate d'éthylène) ayant une teneur en groupe terminal hydroxyle dans la plage de 30 à 200 meq/kg et/ou une teneur en groupe terminal acide furoïque dans la plage de 0 à 15 meq/kg.

9. Composition selon l'une quelconque des revendications 6 à 8, dans laquelle le poly(2,5-furanedicarboxylate d'éthylène) a un poids moléculaire exprimé par une viscosité intrinsèque (IV) supérieure ou égale à 0,75 dl/g, de préférence une IV dans la plage de 0,75 à 1,2 dl/g
dans laquelle, dans un premier temps, la viscosité relative ($\eta_{rel}$) est déterminée dans un mélange 60/40 m/m de phénol et de tétrachloroéthane à 30 °C et une concentration (c) de 0,4 g/dl et la viscosité intrinsèque est ensuite calculée au moyen de l'équation de Bilmer :

$$\text{Viscosité intrinsèque (IV)} = \{\eta_{rel}\text{-}1+3*(\eta_{rel})\}/(4*c).$$

10. Composition selon l'une quelconque des revendications 6 à 9, dans laquelle le poly(2,5-furanedicarboxylate d'éthylène) a une cristallinité supérieure ou égale à 40 J/g, mesurée par calorimétrie différentielle à balayage (DSC).

11. Composition selon l'une quelconque des revendications 6 à 10, dans laquelle le poly(2,5-furanedicarboxylate d'éthylène) a un point de fusion supérieur ou égal à 215 °C.

12. Composition selon l'une quelconque des revendications 6 à 11, dans laquelle le poly(2,5-furanedicarboxylate d'éthylène) a une teneur en acétaldéhyde inférieure ou égale à 1 mg/kg, de préférence inférieure ou égale à 0,5 mg/kg.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010132740 A
- WO 2011043660 A
- WO 2011043661 A
- US 2551731 A
- WO 2013120989 A
- WO 2010077133 A
- WO 2013062408 A
- KR 20140003167
- US 20120207956 A
- WO 2013149222 A
- WO 2013149157 A
- EP 2511320 A
- US 6569479 B
- US 4340721 A


### Non-patent literature cited in the description


- Molecular Characterization and Analysis of Polymers. **A.T JACKSON ; D.F. ROBERTSON.** Comprehensive Analytical Chemistry. Elsevier, 2008, vol. 53, 171-203